# EUROPÄISCHE PATENTANMELDUNG

(11) **EP 1 524 095 A2**
(43) Veröffentlichungstag der Anmeldung: **20.04.2005**
(21) Anmeldenummer: 04024577.1
(22) Anmeldetag: 14.10.2004
(51) Int. Cl.: B29C 65/06

(54) **Verfahren zum Vibrationsschweissen mit verkürzter Ausschwingzeit**

(30) Priorität: 15.10.2003 DE 10347984
(71) Anmelder: Branson Ultraschall Niederlassung der Emerson Technologies GmbH & CO., 63128 Dietzenbach (DE)
(72) Erfinder: Vetter, Jörg, Dipl.-Ing., 63110 Rodgau (DE); Priem, Heiko, 63636 Brachtal/Hellstein (DE)
(74) Vertreter: Wehnert, Werner

(57) **Zusammenfassung**

Beschrieben wird ein Verfahren zum linearen oder biaxialen Vibrationsschweißen. Der Grundgedanke des Verfahrens ist, die Ausschwingzeit der relativen Schwingungen der Fügeteile im Vergleich zu der Ausschwingzeit bei freiem Ausschwingen der Fügeteile kontrolliert zu verkürzen, um die mechanischen Eigenschaften der Fügenaht zu verbessern. Zweckmäßigerweise wird die Ausschwingzeit durch aktives Bremsen des Schwingungsvorganges verkürzt. Das aktive Bremsen kann auf verschiedene Arten realisiert werden.

## Beschreibung

Die vorliegende Erfindung betrifft ein Verfahren zum Vibrationsschweißen, insbesondere zum linearen oder biaxialen (flächigen) Vibrationsschweißen von Fügeteilen aus gleichen oder ähnlichen thermoplastischen Kunststoffen oder von Fügeteilen aus unterschiedlichen Werkstoffen, insbesondere aus einem thermoplastischen Kunststoff und einem anderen schmelzbaren Kunststoff.

Diese Art des Vibrationsschweißens ist eine in der industriellen Serienfertigung weit verbreitete Fügetechnologie. Aktuelle Forschungs- und Entwicklungsarbeiten konzentrieren sich auf das Verbinden duroplastischer Fügeteile, auf die Schweißbarkeit funktionsgefüllter thermoplastischer Werkstoffe, auf die Kombination des Schweißvorganges mit einer Strahlungsvorerwärmung der Fügeteile an den Fügeflächen und auf die Online-Qualitätserkennung zur Reduktion bzw. Vermeidung der zerstörenden Bauteileprüfung. Die Verbundeigenschaften, d.h. die mechanischen Eigenschaften der Fügenaht, sind ebenfalls Gegenstand der Forschungs- und Entwicklungsarbeiten. Die erreichbare Fügequalität ist verfahrensbedingt auf die Matrixfestigkeit der eingesetzten Werkstoffe begrenzt, variiert aber insbesondere bei komplexen Formteilen aus kurzfaserverstärkten Werkstoffen - wie sie z.B. in der Kraftfahrzeugtechnik eingesetzt werden - deutlich aufgrund von Werkstoffanisotrophien (Faserverteilung und -ausrichtung) und lokalen Fügedruckunterschieden (Verzugsproblematik). Durch die zunehmend rechnergestützte Produktauslegung und -simulation, den Einsatz strukturviskoser thermoplastischer Werkstoffe sowie eine druckvariable Prozessführung (Hochdruckanfahren) konnte hier schon eine deutliche Verbesserung erreicht werden. Weitere Verbesserungen sind jedoch wünschenswert.

Der vorliegenden Erfindung liegt die Aufgabe zugrunde, ein Verfahren zum Vibrationsschweißen anzugeben, bei dem die mechanischen Eigenschaften der Fügenaht der Fügeteile durch eine Beeinflussung der relativen Schwingungen der Fügeteile verbessert werden.

Ein diese Aufgabe lösendes Verfahren zum Vibrationsschweißen ist in Anspruch 1 definiert.

Gemäß der vorliegenden Erfindung wird die Ausschwingzeit der relativen Schwingungen der Fügeteile im Vergleich zu der Ausschwingzeit bei "freiem" Ausschwingen der Fügeteile kontrolliert verkürzt. Im Gegensatz zu dem herkömmlichen Vibrationsschweißen, bei dem die relativen Schwingungen der Fügeteile allein durch Reibungseffekte im Schwingsystem und Dämpfung in der Schmelzeschicht der Fügenaht der Fügeteile verzögert werden, wird bei dem erfindungsgemäßen Verfahren die Ausschwingzeit kontrolliert, d.h. aktiv, verkürzt. Wie sich bei Versuchen gezeigt hat, werden hierdurch die mechanischen Eigenschaften der Fügenaht deutlich verbessert. Insbesondere ergibt sich eine erhöhte Zugfestigkeit und z.B. ein erhöhter Berstdruck bei behälterartigen Fügeteilen.

Als Grund für die Verbesserung der mechanischen Eigenschaften der Fügenaht wird vermutet, dass die im Fügespalt der Fügeteile befindliche Schmelzeschicht, die nach dem Abschalten des Schwingungsantriebes erkaltet und erstarrt, aufgrund der verkürzten Ausschwingzeit weniger stark geschädigt wird. So ist vorstellbar, dass bei längeren Ausschwingzeiten bereits erkaltete Schmelzebereiche wieder aufgebrochen werden, was zu einer Schwächung der Fügenaht führt. Aufgrund der verringerten Ausschwingzeit treten derartige Phänomene nicht oder nur in verringertem Ausmaß auf. Vergleichende mikroskopische Strukturanalysen an teilkristallinen Thermoplasten zeigen zudem eine deutlich veränderte Morphologie, die auf die durch eine verkürzte Ausschwingzeit geringeren Scherbelastungen in der Abkühlphase zurückzuführen ist und die Ursache für die verbesserten mechanischen Eigenschaften bildet.

Gemäß der Erfindung wird die Ausschwingzeit, die zweckmäßigerweise auf weniger als 100 ms, vorzugsweise unter 50 ms verkürzt wird, durch aktives Bremsen des Schwingungsvorgangs verkürzt. Dies kann im Fall eines elektromagnetischen Resonanzschwingungssystems durch eine Phasenumkehr der Schwingungsanregung oder eine angepasste Regelung der Amplitude bzw. Position bzw. Bahn des angetriebenen Schwingkopfes der Schweißmaschine erreicht werden. Im Fall eines mechanischen Schwingungssystems mit einem motorischen Antrieb kann das aktive Bremsen durch einen Steuerungseingriff in den Antrieb erreicht werden. Eine weitere Möglichkeit besteht in der Verwendung einer mechanischen Bremse zum Abbremsen des Schweißwerkzeuges, des Schwingkopfes oder des motorischen Antriebes des mechanischen Schwingungssystems.

Weitere Vorteilhafte Weiterbildungen und Ausgestaltungen der Erfindung gehen aus den Unteransprüchen hervor.

Anhand der Zeichnungen werden Ausführungsbeispiele der Erfindung näher erläutert. Es zeigt:
Fig. 1 in stark schematisierter Weise den Aufbau einer Schweißmaschine zum Vibrationsschweißen;
Fig. 2 Diagramme zum Veranschaulichen des Schwingungsvorganges in einer Vibrationsschweißmaschine;
Fig. 3 Diagramme zum Veranschaulichen der Schwingungen eines Probekörpers beim Vibrationsschweißen einschließlich Ein- und Ausschwingvorgang;
Fig. 4 eine Draufsicht auf einen Probekörper, der durch Vibrationsschweißen gefügt wurde;
Fig. 5 eine Schnittansicht in Richtung der Pfeile A-A in Fig. 4;
Fig. 6 Diagramme zum Veranschaulichen der Zugfestigkeit bzw. des Berstdruckes des Probekörpers in Abhängigkeit von der Ausschwingzeit.

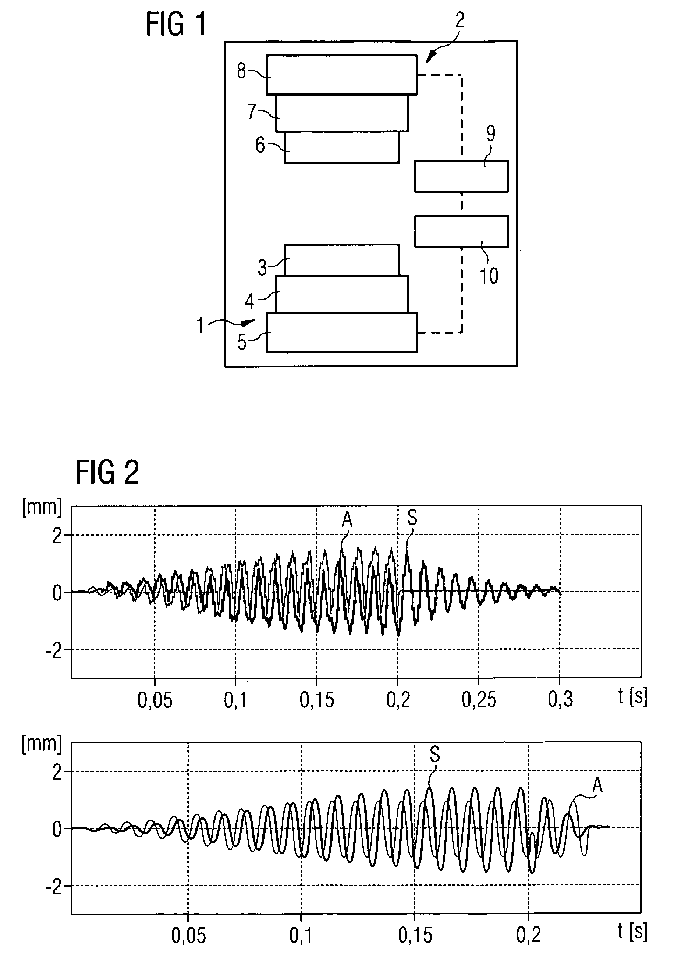

Fig. 1 zeigt in schematischer Weise den Aufbau einer Schweißmaschine zum Vibrationsschweißen mit einem feststehenden unteren Maschinenteil 1 und einem schwingenden oberen Maschinenteil in Form eines Schwingkopfes 2. Das untere Maschinenteil 1 besteht aus einem unteren Aufnahmewerkzeug 3, einem Hubtisch 4 und einer Hub- und Schließkrafteinrichtung 5. Der Schwingkopf 2 besteht aus einem oberen Aufnahmewerkzeug 6, einer Aufspannplatte 7 und einem elektromagnetischen Antrieb 8. Ferner sind ein Generator 9 und eine Steuereinrichtung 10 für den elektromagnetischen Antrieb 8 vorgesehen.

Die zu verbindenden Fügeteile (nicht gezeigt) werden in das untere und obere Aufnahmewerkzeug 3 bzw. 6 eingelegt. Die Fügeteile werden mit Hilfe des Hubtisches 4 an Fügeflächen unter vorgegebenem Schweißdruck aneinandergedrückt und mit Hilfe des Schwingkopfes 2 in relative Schwingungen versetzt, wodurch die Fügeteile in der Fügezone aufgeschmolzen werden. Nach dem Abschalten des elektromagnetischen Antriebs 8 kommen die Fügeteile innerhalb einer bestimmten Ausschwingzeit zur Ruhe. Das aufgeschmolzene Material erkaltet und bildet eine Fügenaht, durch die die Fügeteile miteinander verbunden werden.

Der Schwingungsvorgang in einer herkömmlichen Vibrationsschweißmaschine wird durch das obere Diagramm der Fig. 2 veranschaulicht, wobei die Kurve A die Schwingungsanregung des elektromagnetischen Antriebs 8 und S die Schwingung des im oberen Aufnahmewerkzeug 6 eingespannten Fügeteils (nicht gezeigt) darstellt. Wie bereits eingangs erwähnt, verzögern in einer herkömmlichen Reibschweißmaschine lediglich Reibungseffekte im Schwingungssystem und die Dämpfung in der Schmelzeschicht der Fügeteile die relativen Schwingungen. Im oberen Diagramm der Fig. 2 kommt es daher zu einem Ausschwingen zwischen ungefähr 0,2 und 0,35 s. Die Ausschwingzeit beträgt daher ungerührt 150 ms.

Vergleichende Messungen an herkömmlichen Schweißmaschinen ergaben, dass die zur Zeit realisierbaren Ausschwingzeiten im Bereich von 150 ms bis 500 ms liegen. Die Ausschwingzeiten variieren in Abhängigkeit von Werkstoff, Nahtgestaltung, Abmessungen der Fügeteile, Art der Schweißmaschine und Prozessparametern. Sie sind weitgehend unabhängig von der Art des bei der jeweiligen Schweißmaschine eingesetzten Antriebssystems.

Bei dem erfindungsgemäßen Verfahren wird nun die Ausschwingzeit kontrolliert verkürzt. Dies wird durch aktives Bremsen des Schwingungsvorganges erreicht, indem beispielsweise bei der Schweißmaschine der Fig. 1 eine Phasenumkehr der Schwingungsanregung (Kurve A) durch den elektromagnetischen Antrieb 8 vorgenommen wird. Dies ist in dem unteren Diagramm der Fig. 2 durch die Kurve A veranschaulicht, bei der kurz vor dem Zeitpunkt 0,2 s die Phasenumkehr vorgenommen wird. Dies führt zu einer Ausschwingzeit der Kurve S von ca. 50 ms.

Wie eingangs erwähnt, sollte die Ausschwingzeit kleiner als 100 ms und vorzugsweise im Bereich von 50 ms und darunter sein.

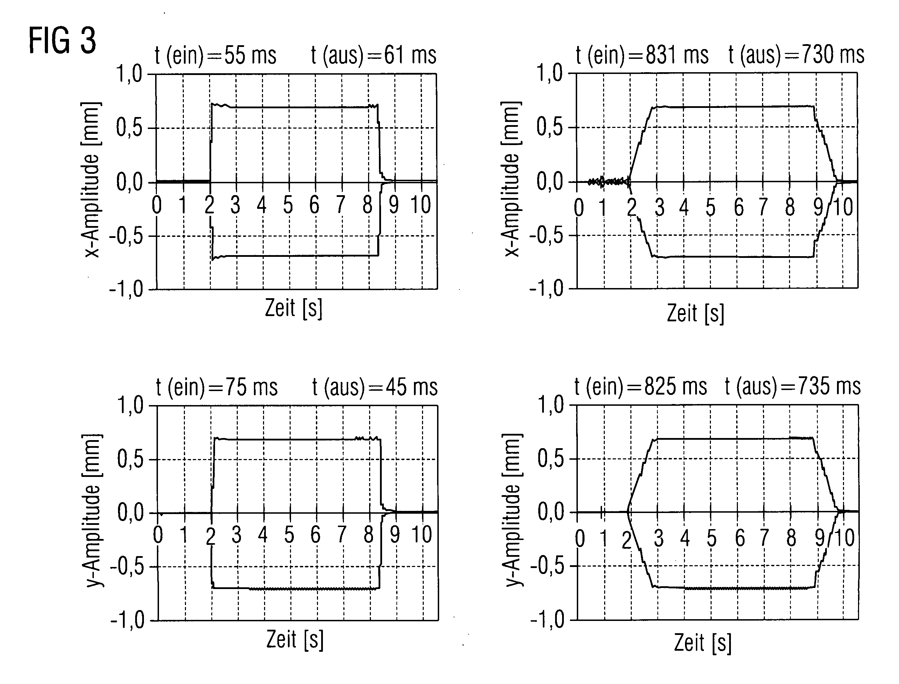

Die Diagramme der Fig. 3 veranschaulichen den Amplitudenverlauf beim biaxialen Vibrationsschweißen komplexer Probekörper aus Polypropylen, wie er von der Anmelderin gemessen wurde, wobei die Kurven in den Diagrammen der Fig. 3 die Einhüllenden der Schwingbewegungen darstellen. Die beiden Diagramme auf der rechten Seite der Fig. 3 veranschaulichen den Verlauf der X- und Y-Amplitude bei "freiem" Ausschwingen (d.h. ohne aktives Bremsen). Wie ersichtlich, betragen dann Ausschwingzeiten t(aus) 730 ms bzw. 735 ms.

Durch aktives Bremsen des Schwingungsvorganges lassen sich dagegen die Ausschwingzeiten t(aus) auf 61 ms bzw. 45 ms verkürzen, wie die linken Diagramme in Fig. 3 zeigen.

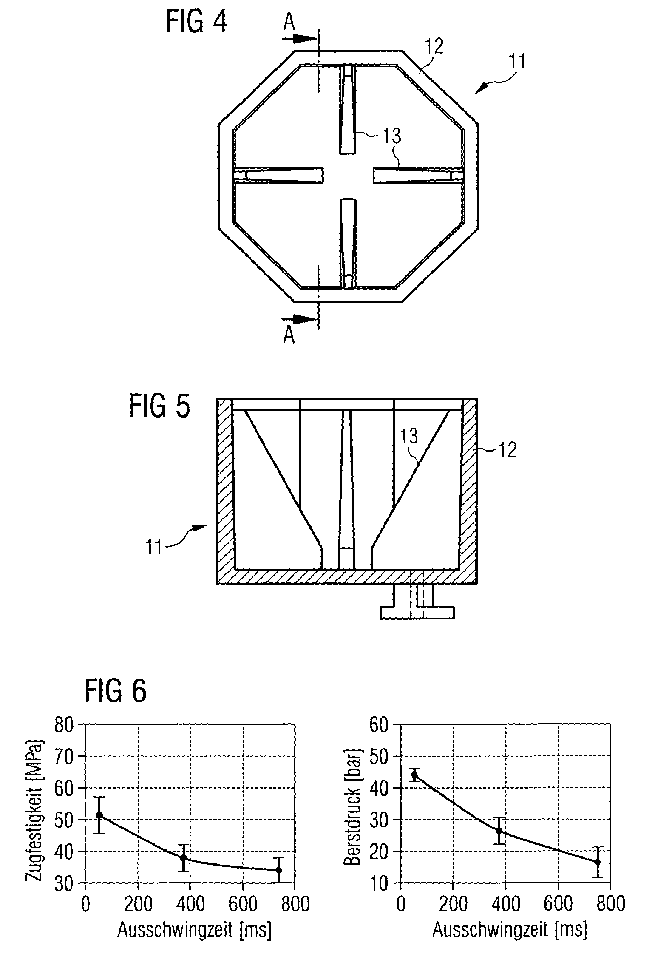

Wie bereits eingangs erläutert, führt die Verkürzung der Ausschwingzeit beim Vibrationsschweißen zu deutlich verbesserten mechanischen Eigenschaften der Fügenaht verschweißter Fügeteile, insbesondere zu erhöhter Zugfestigkeit und erhöhtem Berstdruck. Dies wurde anhand von Versuchen an biaxial vibrationsgeschweißten Probekörpern aus kurzglasfaserverstärktem Polyamid (PA66-GF30) nachgewiesen. Ein derartiger Probekörper 11 ist in den Figuren 4 und 5 dargestellt. Er besteht aus einem becherartigem Gehäuse 12 achteckigen Umfangs mit radial verlaufenden Versteifungswänden 13.

Bei Kurzzeit-Zugversuchen an Streifenproben derartiger Probekörper 11 ergab sich, dass die Zugfestigkeit bei einer Ausschwingzeit von ca. 50 ms um bis zu 40% höher lag als bei Referenzprobekörpern, die mittels einer "frei" ausschwingenden Vibrationsschweißmaschine hergestellt wurden. Die Abhängigkeit der Zugfestigkeit von der Ausschwingzeit ist in dem linken Diagramm der Fig. 6 veranschaulicht.

Ähnliche Ergebnisse ergaben sich bei integralen Berstdruckversuchen an den Probekörpern 11. Auch hier konnte der Berstdruck durch Verkürzung der Ausschwingzeit um bis zu 40% erhöht werden. Die Abhängigkeit des Berstdrucks von der Ausschwingzeit ist in dem rechten Diagramm der Fig. 6 veranschaulicht.

Wie oben erwähnt, kann das aktive Abbremsen des Schwingungsvorganges bei einfachen elektromagnetischen Resonanzschwingungssystemen durch eine Phasenumkehr der Schwingungsanregung erzielt werden, siehe das untere Diagramm der Fig. 2. Schwingungssysteme mit einer Regelung der Amplitude oder der Position (lineare Schwingungen) bzw. Bahn (biaxiale Schwingungen) des Schwingkopfes bedürfen lediglich eines Rechenprogramms, das eine schnelle Regelung der Amplitude bzw. der Position bzw. der Bahn des Schwingkopfes auf den Nullpunkt bzw. eine punktförmige Schwingform erlaubt.

Bei mechanischen Schwingsystemen mit motorischem Antrieb für den Schwingkopf kann das aktive Bremsen durch einen Steuerungseingriff in den motorischen Antrieb erzielt werden. In diesem Fall sind auch mechanische Bremsen für das Schweißwerkzeug, den Schwingkopf oder den motorischen Antrieb möglich. Falls Servomotorantriebe eingesetzt werden, kann das aktive Bremsen des Schwingungsvorganges auch durch Sollwertvorgaben für den Servomotorantrieb erzielt werden.

Das Verfahren gemäß der Erfindung dient zum Verbinden von Fügeteilen aus gleichen oder ähnlichen thermoplastischen Kunststoffen, insbesondere zum Verbinden eines Fügeteils aus einem thermoplastischen Kunststoff mit einem Fügeteil aus einem anderen schmelzbaren Werkstoff. Vorzugsweise dient es zum Verbinden eines Fügeteils aus einem vernetzten oder teilvernetzten Kunststoff (Duroplast oder TPE) mit einem Fügeteil aus einem Thermoplasten oder einem anderen Werkstoff wie Holz, Faserwerkstoff etc.

## Patentansprüche

1. Verfahren zum Vibrationsschweißen, bei dem Fügeteile durch relative Schwingungen unter gegenseitiger Reibung in einer Fügezone aufgeschmolzen und durch anschließendes Erkalten des aufgeschmolzenen Materials in einer Fügenaht miteinander verbunden werden, wobei die relativen Schwingungen der Fügeteile durch einen angetriebenen Schwingkopf erzeugt werden und zur Beendigung des Schweißvorgangs innerhalb einer bestimmten Ausschwingzeit zur Ruhe kommen, **dadurch gekennzeichnet, dass** die Ausschwingzeit der relativen Schwingungen der Fügeteile im Vergleich zu der Ausschwingzeit bei von außen ungestörtem Ausschwingen der Fügeteile kontrolliert verkürzt wird, um die mechanischen Eigenschaften der Fügenaht zu verbessern.

2. Verfahren nach Anspruch 1, **dadurch gekennzeichnet, dass** die Ausschwingzeit auf weniger als 100 ms verkürzt wird.

3. Verfahren nach Anspruch 2, **dadurch gekennzeichnet, dass** die Ausschwingzeit auf weniger als 50 ms verkürzt wird.

4. Verfahren nach einem der vorhergehenden Ansprüche, **dadurch gekennzeichnet, dass** die Ausschwingzeit durch aktives Bremsen des Schwingungsvorganges verkürzt wird.

5. Verfahren nach einem der vorhergehenden Ansprüche, bei dem der Schwingkopf Teil eines elektromagnetischen Resonanzschwingsystems ist, **dadurch gekennzeichnet, dass** das aktive Bremsen des Schwingungsvorganges durch eine Phasenumkehr der Schwingungsanregung des elektromagnetischen Resonanzschwingsystems erzeugt wird.

6. Verfahren nach Anspruch 4, bei dem der Schwingkopf Teil eines elektromagnetischen Resonanzschwingsystems ist und die Position oder Bahn oder Amplitude des Schwingkopfes regelbar ist, **dadurch gekennzeichnet, dass** das aktive Bremsen des Schwingungsvorganges durch Regeln der Position oder Bahn oder Amplitude des Schwingkopfes auf einen Nullwert erzeugt wird.

7. Verfahren nach Anspruch 4, bei dem der Schwingkopf Teil eines mechanischen Schwingungssystems mit einem motorischen Antrieb ist, **dadurch gekennzeichnet, dass** das aktive Bremsen des Schwingungsvorganges durch einen Steuerungseingriff in den motorischen Antrieb erzeugt wird.

8. Verfahren nach Anspruch 4, bei dem der Schwingkopf Teil eines mechanischen Schwingungssystems mit einem motorischen Antrieb ist, **dadurch gekennzeichnet, dass** das aktive Bremsen durch eine mechanische Bremse zum Abbremsen eines bewegten Teils des mechanischen Schwingungssystems erzeugt wird.

9. Verfahren nach einem der Ansprüche 1 bis 8, **gekennzeichnet durch** seine Anwendung bei linearen relativen Schwingungen der Fügeteile.

10. Verfahren nach einem der Ansprüche 1 bis 8, **gekennzeichnet durch** seine Anwendung bei biaxialen relativen Schwingungen der Fügeteile.

11. Verfahren nach einem der vorhergehenden Ansprüche, **gekennzeichnet durch** seine Anwendung zum Verbinden von Fügeteilen aus gleichen oder ähnlichen thermoplastischen Kunststoffen oder zum Verbinden eines Fügeteils aus einem thermoplastischen Kunststoff mit einem Fügeteil aus einem anderen schmelzbaren Werkstoff.

12. Verfahren nach einem der vorhergehenden Ansprüche, **gekennzeichnet durch** seine Anwendung zum Verbinden eines Fügeteils aus einem vernetzten oder teilvernetzten Kunststoff, insbesondere einem Duroplast oder TPE, mit einem Fügeteil aus einem Thermoplasten oder einem anderen Werkstoff.
